**Europäisches Patentamt**

(19) **European Patent Office**

**Office européen des brevets**

(11) Veröffentlichungsnummer: **0 045 104**
**B1**

(12) **EUROPÄISCHE PATENTSCHRIFT**

(45) Veröffentlichungstag der Patentschrift:
**10.04.85**

(51) Int. Cl.⁴: **G 02 F 1/133**, G 02 F 1/137

(21) Anmeldenummer: **81200773.0**

(22) Anmeldetag: **07.07.81**

(54) **Homöotrop nematisches Display mit internem Reflektor.**

(30) Priorität: **28.07.80 CH 5753/80**

(43) Veröffentlichungstag der Anmeldung:
**03.02.82 Patentblatt 82/5**

(45) Bekanntmachung des Hinweises auf die Patenterteilung:
**10.04.85 Patentblatt 85/15**

(84) Benannte Vertragsstaaten:
**CH DE FR GB LI**

(73) Patentinhaber: **BBC Aktiengesellschaft Brown, Boveri & Cie., Haselstrasse, CH-5401 Baden (CH)**

(72) Erfinder: **Kaufmann, Meinolph, Moosstrasse 11, CH-5406 Rütihof-Baden (CH)**
Erfinder: **Schad, Hanspeter, Dr., Boldistrasse 6, CH-5415 Rieden (CH)**

(56) Entgegenhaltungen:
WO - A - 80/01959
DE - A - 2 856 170
FR - A - 2 201 005
FR - A - 2 355 350
FR - A - 2 471 642
US - A - 4 068 925

APPLIED PHYSICS LETTERS, Band 22, Nr. 8, 15. April 1973, Seiten 386-388 New York, U.S.A. F.J. KAHN: "Orientation of liquid crystals by surface coupling agents"
IEEE TRANSACTIONS ON ELECTRON DEVICES, Band ED-26, Nr. 9, September 1979, Seiten 1373-1374 New York, U.S.A. T. UCHIDA et al.: "Guest-host interactions in nematic liquid crystals with negative dielectric anisotropy"

(56) Entgegenhaltungen: (Fortsetzung)
IEEE TRANSACTIONS ON ELECTRON DEVICES, Band ED-22, Nr. 9, September 1975, Seiten 775-783 New York, U.S.A. J. GRINBERG et al.: "Photoactivated birefringent liquid-crystal light vaive for color symbology display"
Martin Tobias "International Handbook of Liquid Crystal Displays 1975-76", Ovum Ltd., London, 1975, Seiten 39-41

ACTORUM AG

## Beschreibung

Die Erfindung betrifft eine Flüssigkristallanzeige gemäss dem Oberbegriff des Anspruches 1.

Nach P. Maltese und C.M. Ottavi (Alta Frequenza, Bd. 47, No. 9, 1978) ist eine nematische Feldeffekt-Flüssigkristallanzeige mit negativer Anisotropie der Dielektrizitätskonstanten und homöotroper Orientierung an der Berandung bekannt, die vor und hinter der Flüssigkristallzelle einen rechts- bzw. linkszirkularpolaren Polarisator aufweist.

Aus der französischen Patentschrift 2 201 005 derselben Erfinder ist eine Flüssigkristallanzeige bekannt mit negativer dielektrischer Anisotropie und homöotroper Orientierung des Flüssigkristalls. Der Flüssigkristall befindet sich zwischen zwei Trägerplatten, von denen mindestens eine durchsichtig ist. Die Dicke der Flüssigkristall-Schicht wird möglichst nahe ihrer optimalen spezifischen Dicke gewählt. Diese Dicke ist normalerweise nicht grösser als 5 µm. Die Anzeige wird in Transmission betrieben. Die Anzeige kann aber auch im Reflexionsbetrieb verwendet werden. Dazu ist die Elektrode 8 gleichzeitig ein metallischer Spiegel. Es wird nicht erwähnt, aus welchem Material dieser Spiegel sein soll. Bei dieser Anordnung wird nur ein Polarisator gebraucht. Um eine Orientierung des Flüssigkristalls zu bewirken, werden die Kontaktflächen der Flüssigkristall-Zelle zunächst mit einer Mischung von Schwefelsäure und Chromsäure gereinigt und sodann mit destilliertem Wasser abgespült. Anschliessend werden diese Flächen mit Wildleder und einem Scheuermittel in einer bestimmten Richtung gerieben.

Für diesen Effekt sind sehr enge ($\sim$3–10 µm) möglichst planparallele Zellenzwischenräume erforderlich. Da sich dieser Anspruch an eine geringe Dickenvariation der Zwischenräume bisher nur durch dicke Glasplatten verwirklichen lässt, ist ein Betrieb mit externem Reflektor mit starker Parallaxe verknüpft. Ein interner Reflektor, wie er aus obiger Schrift bekannt ist, hat den Nachteil, dass die Anzeigeelemente sichtbar sind, auch wenn keine Betriebsspannung angelegt ist. Wird dieselbe Flüssigkristall-Schicht gebraucht wie bei Transmissionsbetrieb, nl. MBBA, IEBBA-Mischung, so beträgt die Dicke der Schicht etwa 2 µm. Solche dünne Schichtdicken lassen sich zur Zeit noch nicht realisieren.

Aus FR-A-2 355 350 ist eine Flüssigkristallanzeige nach dem Gast-Wirt-Prinzip mit einem internen Reflektor bekannt, der aus Aluminiumschuppen besteht. Bei dieser Anzeige wird der Flüssigkristall durch die angelegte Spannung in eine homöotrope Ausrichtung versetzt. Im nicht-angesteuerten Zustand besteht der Flüssigkristall aus spiralförmigen Gebilden, die keine besondere Vorzugsrichtung aufweisen.

Aus dem «Int. Handbook of Liq. Cryst. Displays 1975–76», Seiten 39 bis 41 ist es unter anderem bekannt, Silane für eine homöotrope Orientierung des Flüssigkristalls zu verwenden. In Zusammenhang mit einer Drehzelle wird das Reiben der Zellenplatten für eine homogene Orientierung des Flüssigkristalls beschrieben. Anschliessend wird erwähnt, dass die Techniken wie Aufbringen von Lecithin, HMAB oder Silan mit den vorgenannten Reibmethoden kombiniert werden können. Dadurch kann eine Vorverkippung der Flüssigkristallmoleküle von 4° zur Plattensenkrechte erreicht werden.

Es ist Aufgabe der vorliegenden Erfindung, eine Flüssigkristallanzeige der eingangs genannten Art derart zu verbessern, dass sie mit grossem Blickwinkelbereich, hoher Multiplexierbarkeit jegliche Parallaxe vermeidet und im Vergleich zum Transmissionsbetrieb die Schaltzeiten erheblich reduziert.

Diese Aufgabe wird durch die im Anspruch 1 angegebene Erfindung gelöst.

Bei der Verwendung eines internen Reflektors sowie eines Polarisators nur an der vorderen Zellenplatte der nematischen Flüssigkristallzelle werden im Vergleich zum Transmissionsbetrieb sowie zum Reflexionsbetrieb mit externem Reflektor oder mit internem Reflektor, welcher gleichzeitig Rückelektrode ist, zusätzliche folgende Vorteile erreicht:

Die Flüssigkristallzelle kann mit einer nur halb so grossen Flüssigkristall-Schichtdicke betrieben werden als bei einer transmissiven Flüssigkristallzelle benötigt wird. Die Temperaturabhängigkeit der Spannungskontrastlinie ist verringert. Die Dickenkontrolle der Flüssigkristallschicht ist mit geringerem konstruktiven Aufwand möglich, da die hintere Zellenplatte sehr dick sein kann. Eine zusätzliche externe Lichtquelle ist nicht erforderlich. Die Elektrodensegmente der Anzeige sind nunmehr unsichtbar, wenn keine Betriebsspannung angelegt ist.

Bei Verwendung eines Linearpolarisators gemäss Anspruch 6 kann die Flüssigkristallanzeige mit positivem Kontrast, d.h. dunkle Ziffern auf hellem Grund betrieben werden.

Der Zirkularpolarisator gemäss Anspruch 7 ermöglicht eine klare Darstellung von hellen Ziffern vor dunklem Hintergrund. Verunreinigungen und Kratzspuren, die bei der Behandlung der inneren Oberflächen der Zellenplatten 1, 2 auftreten und die Klarheit des Bildes bei Verwendung eines Linearpolarisators geringfügig beeinträchtigen, sind nicht mehr sichtbar.

Die zuerst geriebenen und anschliessend silanisierten Oberflächen der Zellenplatten 1, 2 erzeugen eine um ca. 1° zur Normalen gekippte Orientierung der Flüssigkristallvorzugsachse. Dadurch wird eine gleichsinnige Verkippung beim Einschalten des Feldes erreicht (Anlegen einer Spannung).

Die Erfindung wird im folgenden anhand einer ein Ausführungsbeispiel darstellenden schematischen Zeichnung näher erläutert.

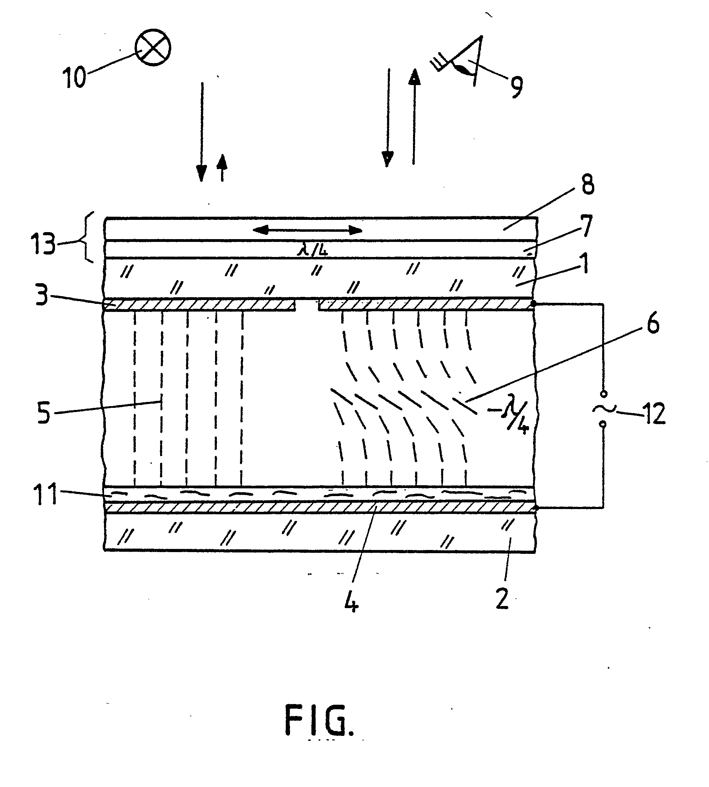

Gemäss der Figur bilden zwei in einem bestimmten Abstand, z.B. 5 µ, zueinander befindliche planparallele Zellenplatten 1, 2, z.B. aus Glas, eine Zelle. An den einander zugewandten Oberflächen sind sie mit einer vorderen, durchsichtigen Elektrodenschicht 3 und einer hinteren nicht

notwendigerweise durchsichtigen Elektrodenschicht 4 aus Zinndioxid belegt, die durch Aufdampfen oder Sputtern aufgebracht werden. Eine Wechselspannungsquelle 12 ist mit den Elektrodenschichten 3, 4 verbunden. An der der Zelle abgewandten Oberfläche der vorderen Zellenplatte 1 ist ein handelsüblicher Zirkularpolarisator 13 angeordnet. Dieser besteht aus einer Viertelwellenplatte 7 und einem mit dieser verklebten Linearpolarisator 8 in Form einer Polarisatorfolie.

Die hintere Elektrodenschicht 4 ist mittels Siebdruck mit einem internen Reflektor 11 bedeckt. Ein derartiger interner Reflektor 11 ist z.B. in der DE-OS 2 629 765 beschrieben. Er besteht vorteilhafterweise aus einer isolierenden Oxidschicht, z.B. aus $CeO_2$, $MgO$, $SiO_2$, $TiO$, $TiO_2$, $ZrO_2$, $Al_2O_3$ oder $Gd_2O_3$, mit eingelagerten reflektierenden Aluminium-Schuppen. Die Aluminiumschuppen haben eine Länge von 2 bis 10 µm.

Die Zellenplatten 1, 2 schliessen zwischen sich eine Schicht aus dem nematischen Flüssigkristall 5, 6 ein. Die Brechungsindexanisotropie des Flüssigkristalls soll zwischen 0.04 und 0.15 liegen. Als Flüssigkristallsubstanz wird deshalb Lixon EN-18, erhältlich von Fa. Chisso, Japan, verwendet. Die Oberfläche der vorderen Elektrodenschicht 3 und/ oder der Oxidschicht des internen Reflektors 11 sind zur homöotropen Ausrichtung des Flüssigkristalls 5, 6 durch Reiben und ein anschliessendes Silanisierverfahren behandelt. Derartige Verfahren sind z.B. in der Veröffentlichung von F.J. Kahn in Appl. Phys. Letters Bd. 22, No. 8 (1973) S. 386–388 beschrieben. Zur homöotropen Orientierung des Flüssigkristalls 5 wird DMOAP = N,N-dimethyl-N-octa-decyl-3-aminopropyltrimenthoxy-silylchlorid verwendet.

Auf der linken Seite in der Figur befindet sich der Flüssigkristall 5 im feldfreien Zustand. Die Vorzugsachsen des Flüssigkristalls 5 sind senkrecht bzw. annähernd senkrecht, z.B. mit einem Kippwinkel von ca. 1°, senkrecht zur Oberfläche der vorderen und hinteren Zellenplatten 1, 2 ausgerichtet.

Auf der rechten Seite der Figur unterliegt der Flüssigkristall 6 der Wirkung eines elektrischen Feldes. Die Vorzugsachsen weisen eine von den Zellenplatten 1, 2 ausgehende zur Mitte der Zelle schrittweise zunehmende Verkippung auf, bis zu dem dort maximalen Verkippungswinkel von nicht ganz 90° zur Richtung des elektrischen Feldes. Die mit 9 und 10 bezeichneten Symbole in der Figur stellen den Betrachter und die Lichtquelle dar.

Die Wirkungsweise ist folgende:
Nach Zirkularpolarisierung durch den Polarisator 13 tritt das von der Lichtquelle 10 kommende Licht durch die Glasplatte 1 und die durchsichtigen vorderen Elektroden-Schichten 3 in die Zelle ein. Aufgrund der annähernden Parallelität von Lichteinfallsrichtung und optischer Achse des Flüssigkristalls 6 erfolgt keine Doppelbrechung. Der Flüssigkristall 6 hat keinen Einfluss auf den Drehsinn des zirkularpolarisierten Lichtes und durchläuft den Flüssigkristall 6 ungestört. Nach Reflexion am internen Reflektor 11 ist das Licht vom Betrachter 9 aus gesehen gegensinnig zum einfallenden Licht zirkularpolarisiert (Reflexion am dichteren Medium-Phasensprung um $\pi$). Es kann deshalb den Polarisator 13 aufgrund des gegensinnigen Drehsinns nicht durchtreten. Der Betrachter 9 sieht eine. gleichmässig dunkle Fläche.

Im Feld-Ein-Zustand erhält man durch das elektrische Feld eine schrittweise zunehmende Verkippung der Vorzugsachsen in Richtung parallel zu den Zellenwänden, und zwar von den gegenüberliegenden Zellenwänden ausgehend bis zu einem maximalen Wert des Kippwinkels gegenüber der Senkrechten zur Oberfläche der Zellenplatten 1, 2 im mittleren Bereich der Zelle (typisch 70°–89°). Die Verkippung der optischen Achse hebt im Falle des optimalen Kontrastes die Zirkularpolarisation auf. Der Betrachter 9 sieht helle Zeichen auf dunklem Grund.

Es ist auch möglich, die Flüssigkristallanzeige mit positivem Kontrast zu betreiben, d.h. Darstellung von dunklen Zeichen vor hellem Hintergrund. Dies kann dadurch erreicht werden, dass nur der Linearpolarisator 8 verwendet wird, ohne Viertelwellenplatte 7. Wiederum erfolgt im feldfreien Zustand keine Doppelbrechung, d.h. keine Aufspaltung des einfallenden linearpolarisierten Lichtes in ordentlichen und ausserordentlichen Strahl, da die optische Achse des Flüssigkristalls 6 annähernd parallel zur Einfallsrichtung des Lichtes liegt. Der Betrachter 9 sieht eine gleichmässig helle Fläche.

Im Feld-Ein-Zustand ist die optische Achse des Flüssigkristalls 6 annähernd senkrecht zur Einfallsrichtung und um ca. 45° zur Polarisationsrichtung des Lichtes verkippt. Infolge Doppelbrechung wird nun das auftreffende Licht in ausserordentlichen und ordentlichen Strahl gleicher Intensität aufgespalten. Der ordentliche und ausserordentliche Strahl weisen nach Durchtritt bis zum internen Reflektor 11 einen Gangunterschied von $\lambda/4$ und nach Reflexion und erneutem Durchlaufen der Flüssigkristallschicht am Linearpolarisator 8 ei-nen Gangunterschied von $\lambda/2$ auf, was einer Drehung der Polarisationsrichtung um 90° gleichkommt.

Das reflektierte Licht kann demnach den Polarisator 8 nicht durchtreten. Der Betrachter 9 sieht dunkle Zeichen auf hellem Hintergrund.

Die erfindungsgemässe Flüssigkristallanzeige zeichnet sich durch hohe Multiplexierbarkeit aus. Die optimale Schichtdicke der Flüssigkristalle 5, 6 ist für EN-18 im Vergleich zum Transmissionsbetrieb nur halb so gross ($\sim 5$ µm). Diese Eigen-schaft reduziert die Schaltzeiten auf ein Viertel der Werte im Falle des Transmissionsbetriebs und verbessert die Winkelcharakteristik, Blickwinkelbereich, bei dem die Anzeige noch guten Kontrast besitzt, ca. $\pm 45°$. Zudem zeigt sich im Vergleich reflektiver mit transmissiven Displayanzeigen, dass sich die Temperaturabhängigkeiten der Spannungs-Kontrast-Kennlinie beim reflektiven Typ verringern.

Messungen im Temperaturbereich von 20° bis 50° bei Einstrahlung von weissen zirkularpolarisierten Licht ergaben:

$$U_{Schwelle} \; (V) = -3.4 \cdot 10^{-4} \left( \frac{1}{°C} \right) \cdot t(°C) + 1.52 \pm 1\%$$

Das Verhältnis von Ansteuerspannung bei 50 % Sättigungskontrast zu Schwellspannung betrug 1.15±2%. Bei einer Ansteuerung der Flüssigkristallanzeige im Multiplexbetrieb mit unterschiedlichem Multiplexgrad in 3:1 Amplitudenselektion mit $U_{Schwelle} \equiv$ quadratischer Mittelwert der Ansteuerspannung im feldfreien Zustand = 1.40 V bei 22° ergaben sich folgende Kontrastverhältnisse:

| Multiplexgrad | 7 | 10 | 20 |
|---|---|---|---|
| Kontrast | 9:1 | 7:1 | 4:1 |

Bei Betrieb der Flüssigkristallanzeige mit dem oberen Spannungswert $U_{Schwelle}$ von 1.4 × 3 = 4.2 kann die Ansteuerung sowohl mit C-MOS als auch mit TTL-Technik erfolgen. Der erreichbare Multiplexgrad der 3:1 Amplitudenselektion lässt sich bei gleichem Kontrast durch ein optimiertes Ansteuerverfahren etwa verdoppeln, d.h. es kann ein Multiplexgrad von 40 bei Kontrast 4:1 erreicht werden. Das optimierte Aussteuerverfahren wird ausführlich beschrieben in IEEE Transactions on Electro-Devices, Vol. ED-21, No. 2, Febr. 1974, S. 146–155 von P.M. Alt und P. Pleshko und in IEEE Transactions on Electro-Devices, Vol. ED-26, No. 5 May 1979, S. 795–802 von J. Nehring und A.R. Kmetz. Allerdings geht hierbei die TTL-Kompatibilität verloren. Die Messung der Schaltzeiten bei einem Multiplexgrad von 7 ergab folgende Werte:

| Einschaltzeit: | 180 ms |
|---|---|
| Ausschaltzeit: | 150 ms. |

Die Temperaturabhängigkeit der Kennliniendaten ist im Bereich von 20° bis 50° so gering, dass bis zum Multiplexgrad 20 (3:1 Amplitudenselektion) keine Spannungskorrekturen des Treibers nötig sind.

## Patentansprüche

1. Multiplexierbare Flüssigkristallanzeige mit
- einer aus zwei planparallelen Platten (1, 2) bestehenden Zelle,
- Elektrodenschichten (3, 4) an den Innenflächen der Platten (1, 2), wobei mindestens die vorderen Elektrodenschichten (3) durchsichtig sind,
- einem nematischen Flüssigkristall mit negativer dielektrischer Anisotropie, welcher
  - durch geriebene orientierende Oberflächen der Zellenplatten (1, 2) eine verkippt homöotrope Vororientierung (5) erhält,
  - durch ein zwischen den Elektrodenschichten (3, 4) erzeugtes elektrisches Feld in einen gleichsinnig stärker verkippten, deformierten Zustand überführbar ist,

- einem internen, metallisch spiegelnden Reflektor,
- nur einem Polarisator, welcher auf der vorderen Platte angeordnet ist,
dadurch gekennzeichnet, dass
- der Flüssigkristall (5, 6) eine Brechungsindexanisotropie von 0,04 bis 0,15 hat, und die Ansteuerspannung so gewählt ist, dass der Gangunterschied zwischen ordentlichem und ausserordentlichem Strahl nach einmaligem Durchlaufen der Flüssigkristallschicht (6) η/4 beträgt,
- der interne Reflektor (11) auf der hinteren Elektrodenschicht (4) aufgetragen ist,
- der interne Reflektor (11) aus einer isolierenden Oxidschicht mit eingelagerten Aluminiumschuppen besteht, und
- die Oberfläche der Reflektorschicht (11) und die Innenfläche der vorderen Platte zum Erzielen der Orientierungswirkung nach dem Reiben silanisiert sind, so dass die Flüssigkristallmoleküle (5, 6) an diesen Oberflächen eine Vorverkippung von ca. 1° zur Plattensenkrechten aufweisen.

2. Flüssigkristallanzeige nach Anspruch 1, dadurch gekennzeichnet, dass die isolierende Oxidschicht aus: $CeO_2$, $MgO$, $SiO_2$, $TiO$, $TiO_2$, $ZrO_2$, $Al_2O_3$ oder $Gd_2O_3$ besteht.

3. Flüssigkristallanzeige nach Anspruch 1, dadurch gekennzeichnet, dass das Silan zur Orientierung der Flüssigkristallmoleküle DMOAP ist.

4. Flüssigkristallanzeige nach Anspruch 1, dadurch gekennzeichnet, dass der Abstand zwischen den planparallelen Platten (1, 2) höchstens 6 μ beträgt.

5. Flüssigkristallanzeige nach Anspruch 1, dadurch gekennzeichnet, dass die Aluminiumschuppen eine Länge von 2 bis 10 μ haben.

6. Flüssigkristallanzeige nach Anspruch 1, dadurch gekennzeichnet, dass der Polarisator ein Linearpolarisator ist.

7. Flüssigkristallanzeige nach Anspruch 1, dadurch gekennzeichnet, dass der Polarisator ein Zirkularpolarisator ist.

## Claims

1. Liquid crystal display with multiplexing capability, having
- a cell consisting of two plane-parallel plates (1, 2),
- electrode layers (3, 4) on the inner surfaces of the plates (1, 2), at least the front electrode layers (3) being transparent,
- a nematic liquid crystal of negative dielectric anisotropy, which
  - is given a tilted homeotropic pre-orientation (5) as a result of rubbed orienting surfaces of the cell plates (1, 2) and
  - is convertible into a deformed state, more strongly tilted in the same direction, by means of an electric field generated between the electrode layers (3, 4),
- an internal metal mirror reflector and

- only one polariser which is located on the front plate,

characterised in that

- the liquid crystal (5, 6) has a refractive index anisotropy of 0.04 to 0.15, and the drive voltage is selected such that the path difference between the ordinary ray and extraordinary ray after a single pass through the liquid crystal layer (6) is $\lambda/4$,
- the internal reflector (11) has been applied to the rear electrode layer (4),
- the internal reflector (11) consists of an insulating oxide layer with incorporated aluminium flakes, and
- the surface of the reflector layer (11) and the inner surface of the front plate are silanised after rubbing, in order to obtain the orienting effect, so that the liquid crystal molecules (5, 6) on these surfaces have a pre-tilt of about 1° relative to the perpendicular on the plates.

2. Liquid crystal display according to Claim 1, characterised in that the insulating oxide layer consists of $CeO_2$, $MgO$, $SiO_2$, $TiO$, $TiO_2$, $ZrO_2$, $Al_2O_3$ or $Gd_2O_3$.

3. Liquid crystal display according to Claim 1, characterised in that the silane for the orienting of the liquid crystal molecules is DMOAP [N,N-dimethyl-N-octadecyl-3-aminopropyltrimethoxy-silyl chloride].

4. Liquid crystal display according to Claim 1, characterised in that the spacing between the plane-parallel plates (1, 2) is at most 6 µ.

5. Liquid crystal display according to Claim 1, characterised in that the aluminium flakes have a length of 2 to 10 µ.

6. Liquid crystal display according to Claim 1, characterised in that the polariser is a linear polariser.

7. Liquid crystal display according to Claim 1, characterised in that the polariser is a circular polariser.

**Revendications**

1. Affichage à cristal liquide multiplexable comportant

- une cellule formée de deux lames planes et parallèles (1, 2),
- de couches d'électrodes (3, 4) sur les surfaces internes des lames (1, 2), au moins la couche d'électrode antérieure (3) étant transparente,
- un cristal liquide nématique à anisotropie diélectrique négative, qui,

- sous l'effet de surfaces d'orientation ayant subi un frottement des lames de cellule (1, 2), acquiert une préorientation homéotrope inclinée (5),
- sous l'effet d'un champ électrique produit entre les couches d'électrodes (3, 4) peut être amené dans un état déformé et incliné plus fortement dans le même sens,
- un réflecteur à effet de miroir métallique interne,
- un seul polariseur qui est disposé sur la lame antérieure,

caractérisé en ce que

- le cristal liquide (5, 6) présente une anisotropie d'indice de réfraction de 0,04 à 0,15, la tension d'activation étant choisie telle que la différence des chemins du rayon ordinaire et du rayon extraordinaire, après une seule traversée de la couche de cristal liquide (6), soit de $\lambda/4$,
- le réflecteur interne (11) est appliqué sur la couche d'électrode postérieure (4),
- le réflecteur interne (11) est formé d'une couche d'oxyde isolante à paillettes d'aluminium incorporées, et
- la surface de la couche réfléchissante (11) et la surface interne de la lame antérieure sont, en vue d'obtenir l'effet d'orientation, traitées au silane après le frottement, de sorte que les molécules de cristal liquide (5, 6) présentent, à ces surfaces, une préinclinaison d'environ 1° par rapport à la perpendiculaire aux lames.

2. Affichage à cristal liquide suivant la revendication 1, caractérisé en ce que la couche d'oxyde isolante est constituée de: $CeO_2$, $MgO$, $SiO_2$, $TiO$, $TiO_2$, $ZrO_2$, $Al_2O_3$ ou $Gd_2O_3$.

3. Affichage à cristal liquide suivant la revendication 1, caractérisé en ce que le silane servant à l'orientation des molécules de cristal liquide est du DMOAP.

4. Affichage à cristal liquide suivant la revendication 1, caractérisé en ce que la distance entre les lames planes et parallèles (1, 2) est tout au plus de 6 microns.

5. Affichage à cristal liquide suivant la revendication 1, caractérisé en ce que les paillettes d'aluminium ont une longueur de 2 à 10 microns.

6. Affichage à cristal liquide suivant la revendication 1, caractérisé en ce que le polariseur est un polariseur linéaire.

7. Affichage à cristal liquide suivant la revendication 1, caractérisé en ce que le polariseur est un polariseur circulaire.

FIG.